# EUROPÄISCHE PATENTSCHRIFT

(11) **EP 1 275 535 B1**
(45) Veröffentlichungstag und Bekanntmachung des Hinweises auf die Patenterteilung: **09.04.2008**
(21) Anmeldenummer: 02012652.0
(22) Anmeldetag: 07.06.2002
(51) Int. Cl.: B60G 21/055, B60G 17/02, F15B 15/08

(54) **Getriebe, insbesondere für eine Stabilisatoranordnung für ein Kfz-Fahrwerk**
Transmission, in particular for a stabilizer assembly for a motor vehicle chassis
Transmission, en particulier pour un ensemble de barres stabilisatrices destiné au chassis d' automobile

(30) Priorität: 10.07.2001 DE 10133431
(43) Veröffentlichungstag der Anmeldung: 15.01.2003
(73) Patentinhaber: Bayerische Motoren Werke Aktiengesellschaft, 80809 München (DE)
(72) Erfinder: Schmidt, Roland, 82131 Stockdorf (DE); Kautz, Thomas, 85777 Kammerberg (DE); Wey, Torsten, 47239 Duisburg (DE)

(56) Entgegenhaltungen:
- EP-A- 0 365 377
- DE-A1- 4 342 360
- DE-A1- 4 443 809
- DE-A1- 10 037 486
- DE-A1- 19 754 539
- DE-A1- 19 855 343
- FR-A- 1 032 528
- GB-A- 1 030 563
- US-A- 3 198 539
- US-A- 3 606 801
- US-A- 3 776 106
- US-A- 6 022 030

## Beschreibung

Die vorliegende Erfindung betrifft eine Stabilisatoranordnung für ein Fahrwerk eines Kraftfahrzeugs, einen Aktuator und ein Getriebe, das zum Einsatz in einem Aktuator einer Stabilisatoranordnung besonders geeignet ist.

Aus dem Stand der Technik ist bekannt, daß an vertikal beweglichen Radaufhängungen eines Kraftfahrzeug-Fahrwerks sog. aktive Stabilisatoranordnungen vorgesehen werden. Aufgabe dieser Stabilisatoranordnungen ist es, bei Kurvenfahrten aufgrund der Querbeschleunigung auftretende Wankbewegung um die Fahrzeuglängsachse deutlich zu mindern. Dazu werden zwei zu einer Fahrzeugachse gehörende Radaufhängungen über eine Stabilisatoranordnung miteinander verbunden, die durch einen Aktuator angetrieben wird. Im Betrieb wird eine gegensinnige Drehbewegung der Stabilisatorhälften von dem Aktuator erzeugt und über Koppelstangen auf zwei an je einer Radaufhängung angelenkte Hebel bzw. Kurbelarme übertragen. Hierdurch kann bei geeigneter Regelung eine Kompensation der während einer Kurvenfahrt auftretenden Wankbewegung des Fahrzeugaufbaus erreicht werden.

Die auftretende Belastung ist dabei selbstverständlich bei Links- und Rechtskurven jeweils entgegengesetzt gerichtet. Bei Wechsel der Stabilisierungsrichtung wird das Drehmoment des Aktuators folglich auch in umgekehrter Richtung benötigt. Spiel in radialer und axialer Richtung erzeugt im Zuge dieses Belastungswechsels von einer in die jeweils andere Belastungslage Geräusche. Der Wechsel der Belastungslagen findet immer in einem Bereich einer Mittellage zwischen den Belastungslagen statt. In der Mittellage sind der Stabilisator und damit auch das Getriebe nahezu momentenfrei. Dieser Wechsel der jeweiligen Anlagefläche erzeugt nach dem Abheben aus der einen Belastungslage nach Überwinden des prinzipbedingten Spiels durch das Aufprallen oder Anschlagen in der anderen Belastungslage ein Geräusch, das sich störend auf den Komfort eines entsprechend ausgestatteten Fahrzeugs auswirkt. Da sich der Aktuator bei Geradeausfahrt oder leichten Kurven immer in diesem Bereich der Neutrallage befindet, treten Belastungswechsel und die damit verbundenen Geräusche häufig auf. Hiermit ist neben der Geräuschentwicklung auch ein erhöhter Verschleiß der betreffenden Abschnitte der Kontaktbereiche verbunden.

Aus der DE 44 43 809 A1 ist die Verwendung eines prinzipbedingt mit Leerlaufverlusten behafteten hydraulischen Aktuators zur Erzeugung der gegensinnigen Drehbewegung der Stabilisatorhälften bekannt, wobei zur Senkung der Geräuschbelastung eine Verklebung der beiden Stabilisatorhälften mit dem Aktuator sowie zur Geräuschminderung und zusätzlichen Schwingungsdämpfung eine Lagerung der Stabilisatorhälften in Gummimetalllagern vorgeschlagen wird.

In der noch unveröffentlichten deutschen Patentanmeldung DE 100 02 455 ist ein gegenüber bekannten Lösungen deutlich vereinfachter Aktuator für eine Stabilisatoranordnung beschrieben, bei der zur Bildung eines Aktuators ein Getriebe mit einem Antrieb in Form eines elektromotorischen Stellantriebs, einer hydraulischen Zylinder-Kolbeneinheit o.ä. verbunden ist. Ausgehend von der Erkenntnis, daß ein Getriebe in einer Stabilisatoranordnung maximal einen Verdrehwinkel von ca. 45° einstellen können muss, wird in der genannten Patentanmeldung die Verwendung von Kurvenbahn-Getrieben vorgeschlagen. Zur Einstellung eines Verdrehwinkels wird ein Koppelelement gleichzeitig in voneinander verschiedenen Kurvenbahnen zweier voneinander getrennter Kurvenbahnträger entlang einer gemeinsamen Längsachse geführt. Eine axiale Verschiebung des Koppelelements wird beispielsweise durch eine elektromotorisch angetriebene Gewindespindel hervorgerufen, so daß sich in einfacher und zuverlässiger Weise Verdrehbewegungen der Kurvenbahnträger gegeneinander erzielen lassen, die über die jeweils an einem Kurvenbahnträger drehfest angebrachten Stabilisatorhälften an die jeweiligen Radaufhängungen weitergeleitet werden.

Ein Kurvenbahngetriebe nach dem Oberbegriff des Anspruchs ist weiterhin aus US-A-3 198 539 und EP-A-365 377 bekannt.

Ausgehend von einem Getriebe und einem Aktuator der vorstehend beschriebenen Stabilisatoranordnung ist es die Aufgabe der vorliegenden Erfindung, deren betriebsbedingte Geräuschentwicklung zu senken.
Die Aufgabe wird erfindungsgemäß durch die Merkmale der jeweiligen unabhängigen Ansprüche gelöst. Vorteilhafte Weiterbildungen sind in den jeweiligen Unteransprüchen gekennzeichnet.

Eine erfindungsgemäße Stabilisatoranordnung zeichnet sich demnach durch einen Aktuator mit einem Kurvenbahn-Getriebe aus, in dem ein Koppelelement des Getriebes mindestens ein in die Kurvenbahnen der Kurvenbahnträger eingreifendes Element aufweist, das derart mit einer Vorspannung beaufschlagt ist, daß es sich in einer im wesentlichen unbelasteten Neutrallage des Getriebes in Anlage mit einer Kurvenbahn jedes der Kurvenbahnträger befindet. Durch Einstellung einer statischen Vorspannung beispielsweise zwischen einem Antrieb des Aktuators und dem damit mechanisch verbundenen Koppelelement ist somit eine sichere Anlage des eingreifenden Elements in eine Kurvenbahn je Kurvenbahnträger auch in einer neutralen Lage möglich.

In einer bevorzugten Ausführungsform der Erfindung sind zumindest zwei Elemente in jeweils voneinander verschiedene Kurvenbahnen zweier voneinander getrennter Kurvenbahnträger eingreifend angeordnet, und es sind Mittel zum federelastischen Verspannen der beiden eingreifenden Elemente vorgesehen. Die eingreifenden Elemente können auf einer gemeinsamen Achse angeordnet sein, wobei die Achse beispielsweise aus einem federelastischen Material besteht, insbesondere einem Federstahl. Die Achse aus einem federelastischen Material wird vorzugsweise durch Abweichung aus einer geradlinigen Verbindung zwischen den eingreifenden Elementen vorgespannt. Alternativ oder auch zusätzlich können die Bahnen von zwei einander gegenüberliegen Kurvenbahnen zur Erzeugung einer Vorspannung in der Achse um einen definierten Betrag zueinander versetzt angeordnet sein.

In einer weiteren Ausführungsform ist eine federelastisch ausgebildete Verengung und/oder ein Federelement zumindest im Bereich einer Neutrallage an einer Bahn oder Flanke einer Kurvenbahn vorgesehen. Dabei wird unter dem Begriff der Bahn oder Flanke einer Kurvenbahn die Form oder Linie eines Randes einer Kurvenbahn verstanden, die zur Ausbildung eines erfindungsgemäßen federelastischen Bereiches eine Aussparung, Hinterschneidung oder Ausfüllung mit einem geeigneten sonstigen Material aufweist, beispielsweise mit einem gummiartigen Werkstoff.

In einer vorteilhaften Weiterbildung weist ein erfindungsgemäßes Getriebe an dem Koppelelement zumindest zwei Achsen mit den sog. eingreifenden Elementen und dementsprechend mehrere zueinander komplementäre Kurvenbahnen in den voneinander getrennten Kurvenbahnträgern auf. Hiermit werden mehrere Belastungspunkte geschaffen, durch welche die jeweilige (Punkt-)Belastung gesenkt wird. Zudem können bei der Auslegung Symmetrien der Belastung und ein vergleichsweise günstigerer Momentenverlauf ausgenutzt werden, um beispielsweise die Stärke der einzelnen Bauelemente zu senken und/oder preiswerte Werkstoffe einsetzen zu können. So ergibt sich bei Kostensenkung und Steigerung der Lebensdauer ein insgesamt günstiger Momentenverlauf sowohl in den Kurvenbahnträgern als auch in dem Koppelelement.

In einer Ausführungsform sind Federelemente an der genannten Achse und/oder zwischen den (zumindest zwei) genannten Achsen zur Erzeugung einer Vorspannung angeordnet. Dies können je nach erforderlicher Federsteifigkeit einfache Schraubenfedern - als Zug- und/oder Druckfedern ausgebildet - sein. Die Achsen können zudem an dem Koppelelement angelenkt sein, d.h. dass die die eingreifenden Elemente tragenden Achsen gegenüber dem Koppelelement zumindest geringfügig beweglich, insbesondere verdrehbar oder verschwenkbar sind, und zwar gegeneinander unter Einwirkung des oder der Federelement(e).

Zur wesentlichen Minderung des Widerstands oder der Reibung beim Verschieben des Koppelelements unter Last ist das in eine Kurvenbahn eingreifende Element als Rolle oder Rollenpaar ausgebildet. Hierbei ist u.a. eine konkrete Bauform des jeweiligen Getriebes zu berücksichtigen, d.h. insbesondere ob es sich um eine Hintereinanderschaltung oder Überlagerung der Kurvenbahnträger handelt, wobei diese verschiedenen Bauformen auch in der weiter oben genannten, nicht vorveröffentlichten deutschen Patentanmeldung 100 02 455.6 angegeben sind. Bei der Auswahl von Materialpaarungen von Rollen-Material und dem Material der Kurvenbahnen im Kontaktbereich kann der Fachmann dabei unter der Bedingung der Übertragung vorbestimmter Momente bei statistisch erfaßter Häufigkeit des Auftretens frei auf bekannte Materialien und fertige Produkte insbesondere im Bereich der Rollen sowie deren Lagerung zurückgreifen.

In einer bevorzugten Ausführungsform der Erfindung sind die eingreifenden Elemente gegeneinander so verspannt, daß jedes eingreifende Element mindestens im Bereich einer Neutrallage auf einer Seite oder Flanke der Bahn bzw. Kurvenbahn anliegt. Diese Lösung wird insbesondere zur gegenseitigen Verspannung der eingreifenden Elemente einer federelastisch ausgebildeten, zueinander exzentrisch angeordneten Lagerung der eingreifenden Elemente auf einem gemeinsamen Ende der Achse vorgesehen. Um ein Abheben der Rollen von einer jeweiligen Kurvenbahn generell zu unterbinden, kann auch eine stete Anlage der Rollen an den Kurvenbahnen durch Einstellung einer hohen Vorspannung erreicht werden.

In einer bevorzugten Ausführungsform der Erfindung umfaßt eine Antriebseinheit eine Gewindespindel, auf der das Koppelelement eines vorstehend beschriebenen Getriebes als Mutter axial verschieblich angeordnet ist. Die Antriebseinheit kann dabei sehr preiswert in Form eines Elektromotors ausgeführt sein.

Ein Getriebe gemäß vorliegender Erfindung kann unter Wahrung der vorstehend genannten Vorteile auch in einfacher Weise auf einen Einsatz in anderen technischen Gebieten mit einer entsprechenden Problemstellung außerhalb des Fahrzeugbaus angepaßt werden.

Ausführungsformen der Erfindung werden nachfolgend ausgehend von einer bekannten Stabilisator-Anordnung anhand der beigefügten Zeichnungen näher beschrieben. Dabei zeigt:
- Fig. 1: eine perspektivische Schnittdarstellung einer bekannten Stabilisatoranordnung;
- Fig. 2: eine Skizze eines Schnitts in einer Ebene B-B von Fig. 1;
- Fig. 3: eine Skizze einer ersten Ausführungsform gemäß vorliegender Erfindung in einer Darstellung analog Fig. 2;
- Fig. 4: eine Skizze eines Verhaltens der Ausführungsform von Fig. 3 bei hohem Stabilisierungsmoment;
- Fig. 5: eine Skizze einer zweiten Ausführungsform gemäß vorliegender Erfindung in einer Darstellung analog Fig. 2 und
- Fig. 6: eine perspektivische Darstellung einer dritten Ausführungsform gemäß vorliegender Erfindung.

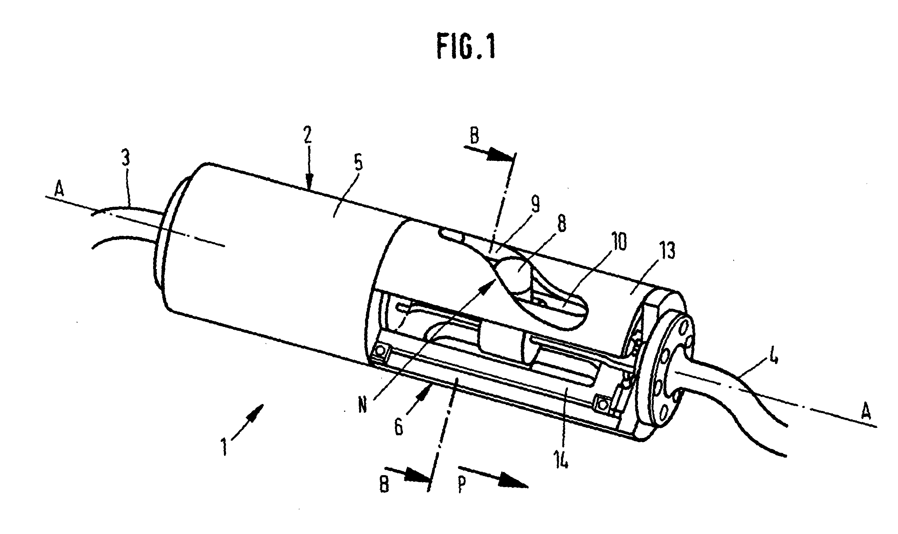

In **Figur 1** ist eine Stabilisatoranordnung 1 eines Kraftfahrzeugs im Teilschnitt perspektivisch dargestellt, wie sie in der nicht vorveröffentlichten deutschen Patentanmeldung 100 02 455 beschrieben ist. Die Stabilisatoranordnung 1 umfaßt einen Aktuator 2, der mit zwei Stabilisatorhälften 3, 4 derart verbunden ist, daß die Stabilisatorhälften 3, 4 durch den Aktuator 2 in definierter Weise um die Längsachse oder Drehachse A gegeneinander verdreht werden können. Der Aktuator 2 umfasst dabei einen Antrieb 5 und ein Getriebe 6, das in Form eines Kurvenbahn-Getriebes ausgebildet ist.

Im Getriebe 6 greift ein Koppelelement 7, welches Rollen 8 trägt, in voneinander verschiedene Kurvenbahnen 9, 10 ein, wobei die erste Kurvenbahn 9 in einem ersten Kurvenbahnträger 13 und die zweite Kurvenbahn 10 in einem zweiten Kurvenbahnträger 14 vorgesehen ist. Wie ersichtlich sind die gegeneinander um die Drehachse/Längsachse A verschwenkbaren Kurvenbahnträger 13, 14 zur Verringerung der Baugröße bei geringer Zunahme des Durchmessers des Getriebes 6 übereinanderliegend bzw. ineinandergeschachtelt angeordnet, d.h. der hohlzylindrische Kurvenbahnträger 14 befindet sich innerhalb des hohlzylindrischen Kurvenbahnträgers 13.

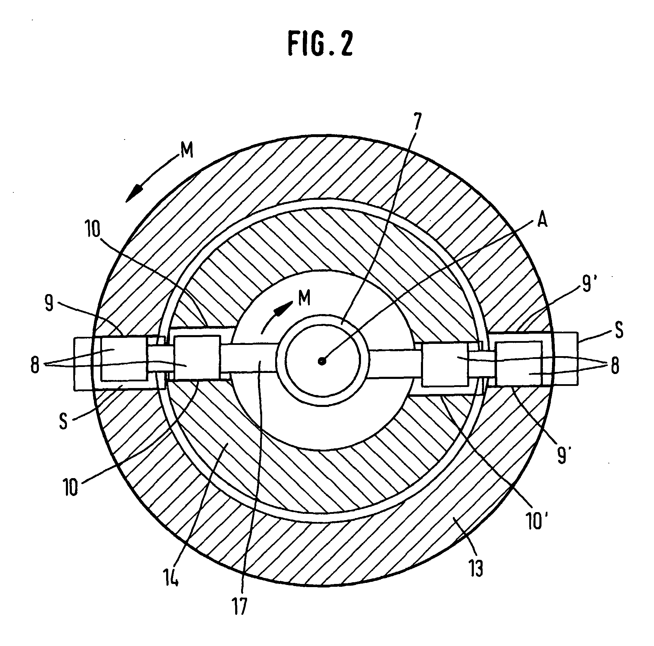

Wie die Schnittdarstellung nach Figur 2 zeigt, sind bezüglich der Drehachse A einander gegenüberliegend komplementäre Kurvenbahnen 9, 9' bzw. 10, 10' in den Kurvenbahnträgern 13 bzw. 14 vorgesehen, wobei sämtliche Rollen 8 auf einer gemeinsamen Achse 17 angeordnet sind, die mit dem Koppelelement 7 verbunden ist. Wenn ein mehr oder weniger großes Drehmoment M zwischen den beiden Kurvenbahnträgern 13 und 14 anliegt, so liegen - wie figürlich dargestellt - alle Rollen 8 jeweils an einer Seite oder Flanke der Kurvenbahnen 9, 9' bzw. 10, 10' an. Wenn das Drehmoment M zwischen den Kurvenbahnträgern 13 und 14 in der durch die Pfeile (M) angegebenen Richtung wirkt, d.h. der innere Kurvenbahnträger 14 ist im Uhrzeigersinn gegen den äußeren Kurvenbahnträger 13 quasi "verspannt", so liegen von der Drehachse A ausgehend jeweils in Richtung der Achse 17 radial nach außen betrachtet die Rollen 8, d.h. die in die Kurvenbahnen 10, 10' des "inneren" Kurvenbahnträgers 14 eingreifenden sog. Elemente jeweils an der linken Flanke der Kurvenbahn 10 bzw. 10' an, während die Rollen 8, d.h. die in die Kurvenbahnen 9, 9' des "äußeren" Kurvenbahnträgers 13 eingreifenden Elemente jeweils an der rechten Flanke der Kurvenbahn 9 bzw. 9' anliegen.

Wenn (vgl. **Figur 1**) das Koppelelement 7 in oder gegen Richtung des Pfeils P verschoben wird, so wird dieses Drehmoment M entweder erhöht oder verringert, was selbstverständlich durch den jeweiligen Verlauf der Kurvenbahnen 9 und 10 bestimmt wird. Bei einer Verringerung des Drehmoments M zwischen den beiden Kurvenbahnträgern 13, 14, was im übrigen auch durch externe Einflüsse hervorgerufen werden kann, d.h. durch ein anderes von den Stabilisatorhälften 3, 4 in den Aktuator 2 und somit in das Kurvenbahn-Getriebe 6 eingeleitetes Moment, werden sich bei einem Wechsel der Stabilisierungsrichtung die Rollen 8 durch eine Mittellage zwischen den beiden Flanken der Kurvenbahn 9, 9', 10, 10' auf die jeweils andere Seite der jeweiligen Kurvenbahn bzw. zu deren andern Flanke hin bewegen.

Da dann das Drehmoment M in einer der Darstellung in **Figur 2** entgegengesetzten Richtung wirkt oder benötigt wird, liegen die Rollen 8 dementsprechend an der (gemäß **Figur 2**) gegenüberliegenden Seite oder Flanke der jeweiligen Kurvenbahn 9, 9' bzw. 10, 10' an. Dieser beschriebene Wechsel der Andruckseite oder Flanke an/in der jeweiligen Kurvenbahn 9, 9', 10, 10' findet beim soweit geschilderten bekannten Stand der Technik stets im Bereich der Mittellage der Kurvenbahn statt, in der die Stabilisator-Anordnung 1 und damit auch das Getriebe 6 nahezu momentenfrei sind.

Dieser beschriebene Wechsel der Anlagefläche erzeugt nach dem Abheben jeder Kurvenrolle 8 auf der jeweils einen Seite der zugehörigen Kurvenbahn und dem anschließenden Überwinden eines prinzipbedingten Spieles S (vgl. **Fig.2**) durch das Aufprallen auf der Gegenseite oder gegenüberliegenden Flanke dieser Kurvenbahn ein Geräusch, welches sich störend auf den Komfort auswirkt. Da sich der Aktuator 2 bei Geradeausfahrt des Kraftfahrzeugs oder in leichten Kurven immer in diesem Bereich befindet, tritt dieses Geräusch häufig auf.

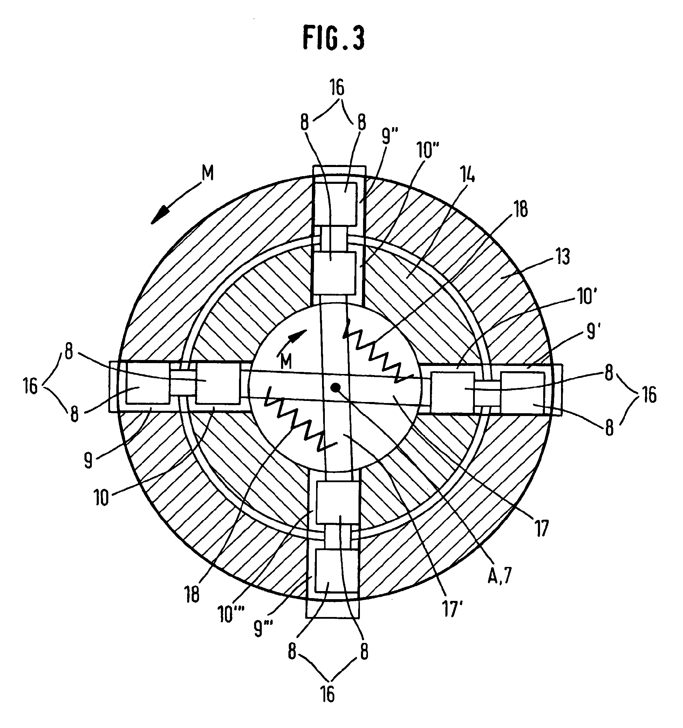

Nachfolgend werden erfindungsgemäße Maßnahmen zur Reduzierung oder Vermeidung dieser Geräusche anhand der Abbildungen der Figuren 3 bis 6 beschrieben. Ohne Beschränkung des Schutzbereichs wird dabei nun nur noch auf eine prinzipiell aus der DE 100 02 455 bekannte Bauform eines Getriebes 6 eingegangen, in der zur Schaffung kompakter Abmessungen eines Aktuators 2 Kurvenbahnträger 13, 14 in Form von Hohlzylindern um die gemeinsame Drehachse A übereinanderliegend bzw. ineinandergeschachtelt angeordnet sind. Auch dementsprechend sind zur wesentlichen Minderung des Widerstands oder der Reibung beim Verschieben des Koppelelements 7 unter Last die eingreifenden Elemente je Kurvenbahn als Rollen 8 oder in der angesprochenen Kompakt-Bauform als Rollenpaar 16 ausgebildet. Jeweils zwei Rollenpaare 16 sind auf einer Achse 17 gelagert.

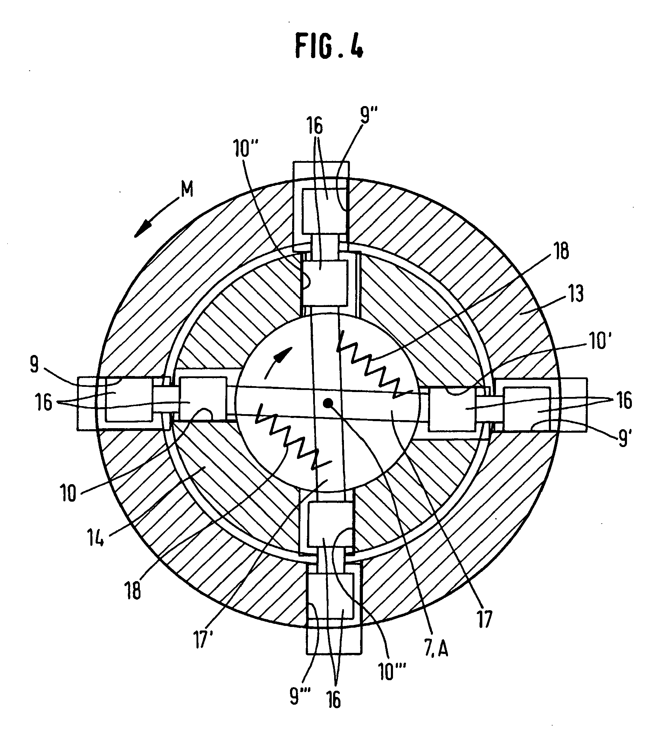

Beim ersten Ausführungsbeispiel nach den **Figuren 3** **und** **4** sind zwei Achsen 17, 17' mit jeweils darauf angeordneten Rollen 8 im wesentlichen senkrecht zueinander am nicht detailliert dargestellten Koppelement 7 angelenkt, wobei dieses Koppelelement 7 bspw. als Spindelmutter ausgebildet ist und mittels einer vom Antrieb 5 (vgl. **Figur 1**) um die Längs-Drehachse A in Rotation versetzten Gewindespindel in oder gegen Pfeilrichtung P längs dieser Längs-Drehachse A verschoben werden kann. Die Achsen 17, 17' sind nun gegenüber diesem Koppelelement 7 zumindest geringfügig um die Drehachse A verschwenkbar oder verdrehbar. Da hier zwei Achsen 17, 17' vorhanden sind, die jeweils Rollen 8 als in Kurvenbahnen des Kurvenbahn-Getriebes 6 eingreifende Elemente tragen, sind selbstverständlich jeweils vier zueinander komplementäre Kurvenbahnen 9, 9', 9", 9"' bzw. 10, 10', 10", 10"' in den Kurvenbahnträgern 13 bzw. 14 vorgesehen.

Bei diesem ersten Ausführungsbeispiel sind nun zum Aufbau einer Vorspannung, die weiter oben vor der Figurenbeschreibung als erfindungswesentliche Maßnahme beschrieben wurde, zwischen den Achsen 17, 17' Federelemente 18 in Form von Druckfedern vorgesehen bzw. eingespannt. Quasi scherenartig sind die beiden Achsen 17, 17' somit gegeneinander verspannt, so dass dann, wenn kein Drehmoment oder nur ein geringes Drehmoment M zwischen den Kurvenbahnträgern 13 und 14 vorliegt, alle Rollen 8 entsprechend einer scherenförmigen Kippbewegung an einer Flanke der jeweiligen Kurvenbahnen 9, 9', 9", 9"' bzw. 10, 10', 10", 10"' anliegen. Dieser Zustand ist in **Figur 3** dargestellt, wobei in anderen Worten ausgedrückt dann quasi zwei einander gegenüberliegende Sektoren der Kurvenbahnträger 13 und 14 von den Rollen 8 zangenartig eingeklemmt sind. Wie bereits erwähnt gilt dies jedoch nur für den momentenfreien Zustand sowie für Betriebszustände mit relativ geringem Drehmoment M zwischen den Kurvenbahnträgern 13, 14. Dabei sind lediglich die in den Kurvenbahnen 9", 10', 9''', 10 laufenden Rollen im Sinne einer geringen Drehmoment-Übertragung im Eingriff aktiv.

Die weiteren Rollen 8 in den anderen Kurvenbahnen 9, 9' bzw. 10", 10"' laufen nur wegen der durch die Federelemente 18 aufgebrachten Vorspannung mit, nachdem sie an der jeweiligen Kurvenbahn-Flanke anliegen, übertragen dabei jedoch kein zur Wankstabilisierung wirksames Moment.

Übersteigt das zwischen den Kurvenbahnträgern 13, 14 zu übertragende Drehmoment M (im beschriebenen Anwendungsfall handelt es sich hierbei um ein Fahrzeug-Wank-Stabilisierungsmoment) die Höhe der von den Federelementen 18 aufgebrachten Vorspannung der Rollenpaare 16, dann kommen sämtliche Rollenpaare 16 bzw. sämtliche Rollen 8 zur momentenübertragenden Anlage an den jeweiligen Kurvenbahn-Flanken, so wie dies in **Figur 4** dargestellt ist. Der Punkt des Wechsels der Anlagefläche in den Kurvenbahnen, d.h. der Übergang vom Zustand nach **Fig.3** zu demjenigen nach **Fig.4** wird somit durch die von den Federelementen 18 aufgebrachte Vorspannung in der Getriebe-Anordnung 6 bzw. Stabilisator-Anordnung 1 aus einer Neutrallage N (wie im Zusammenhang mit dem bekannten Stand der Technik nach **Fig.2** erläutert wurde) heraus in einen Bereich betragsmäßig höherer Drehmomente M zwischen den Kurvenbahnträgern 13, 14 verschoben.

Betriebszustände, in denen derartige höhere Drehmomente M zwischen den Kurvenbahnträgern 13, 14 vorliegen, treten im praktischen Anwendungsfall jedoch wesentlich seltener auf als nahezu momentenfreie Betriebszustände, da sich der Aktuator 2 (im bevorzugten Anwendungsfall) überwiegend in einem neutralen Bereich bewegt. Demzufolge tritt an einer erfindungsgemäßen Getriebe- oder Stabilisatoranordnung auch der beschriebene Wechsel der Anlageflächen oder Anlage-Flanken in den Kurvenbahnen erheblich seltener auf als beim Stand der Technik nach **Fig.2**. Zudem erfolgt der Wechsel der Anlageflächen in Abhängigkeit von der Federsteifigkeit der erfindungsgemäßen Federelemente 18 relativ langsam und damit geräuschund auch vergleichsweise verschleißärmer als beim bekannten Stand der Technik, wobei noch darauf hingewiesen sei, dass anstelle der hier beiden Federelemente 18 auch nur ein einziges Federelement oder andersartige Federelemente vorgesehen sein können, um die gewünschte Vorspannung an den Rollen 8 bzw. an den in den Kurvenbahnen 9, 9',..., 10. 10',... geführten Elementen zu erzielen.

In einer nicht weiter dargestellten Ausführungsform der Erfindung wird ein analoger Effekt mit in der Neutrallage an den Kurvenbahnen bzw. an deren Flanken anlieganliegenden Elementen bzw. Rollen durch eine geeignete Vorspannung dadurch erzielt, dass die Verläufe von zwei einander gegenüber liegenden zueinander komplementären Kurvenbahnen jeweils in den beiden Kurvenbahnträgern 13 und 14 um einen definierten Betrag zueinander versetzt sind. Bei einer Ausführungsform, die ähnlich der Darstellung nach **Fig.2** gestaltet ist, wäre somit die Kurvenbahn 9' geringfügig gegenüber Kurvenbahn 9 seitlich versetzt, d.h. dass sich bspw. auf der linken Seite zwischen den Zentren dieser Kurvenbahnen 9, 9' ein Sektor-Winkel von 178° befindet, während auf der rechen Seite der Kurvenbahnträger 13 einen Sektor-Winkel von 182° beschreibt. Entsprechendes gilt für die Kurvenbahnen 10, 10'. Dabei kann dieser "seitliche" Versatz entweder nur im mittleren Bereich der Kurvenbahnen vorgesehen sein, d.h. in der sog. Neutralstellung N des Getriebes 6, in welchem/welcher nur ein betragsmäßig geringes Drehmoment zwischen den Kurvenbahnträgern 13, 14 herrscht, oder es kann sich dieser "seitliche" Versatz über über die gesamte Länge der Kurvenbahnen 9, 10 usw. erstrecken. Ein derartiger Versatz verspannt jedenfalls die Achse 17 (bzw. ggf. die mehreren Achsen 17) am Koppelelement 7 in jedem Fall in einem bestimmten Maß.

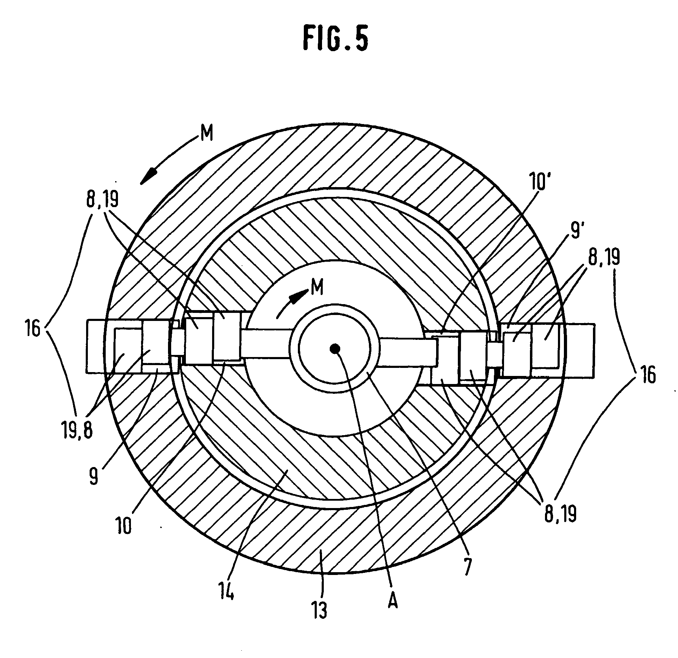

In **Figur 5** ist eine weitere mögliche Ausführungsform der vorliegenden Erfindung dargestellt. Hier sind (analog Fig.2) wieder nur zwei Kurvenbahnen 9, 9' bzw. 10, 10' je Kurvenbahnträger 13 bzw. 14 vorhanden. In jeder der Kurvenbahnen 9, 9', 10, 10' läuft nicht mehr nur eine Rolle 8 wie in Fig.2, sondern es laufen jeweils zwei Rollen 8 als ein Rollenpaar 19 in jeder Kurvenbahn. Die Rollen 8 jedes Rollenpaares 19 sind gegeneinander auf geeignete Weise, hier wie dargestellt durch zueinander exzentrische Lagerung an einem gemeinsamen Ende der Achse 17, so verspannt, daß jede Rolle 8 immer jeweils auf einer Seite oder Flanke der jeweiligen Kurvenbahn anliegt. Die Federsteifigkeit innerhalb dieser Vorspannung kann dabei durch das gewählte Material für die Rollen 8 und/oder einen bspw. als Torsionsfeder ausgebildeten Bereich bzw. Abschnitt der Achse 17 zwischen den Rollen 8 wie gewünscht eingestellt werden. Es kommt somit im Gegensatz zu der Ausführungsform entsprechend den **Figuren 3****,** **4** zu keinem Übergang zwischen den Kurvenbahn-Flanken, d.h. es tritt kein Flankenwechsel auf, da der Kontakt zwischen den Rollen 8 und den jeweiligen Kurvenbahn-Flanken unter allen Umständen unabhängig von der Größe des jeweils im System bzw. in der Anordnung vorliegenden Drehmoments bestehen bleibt.

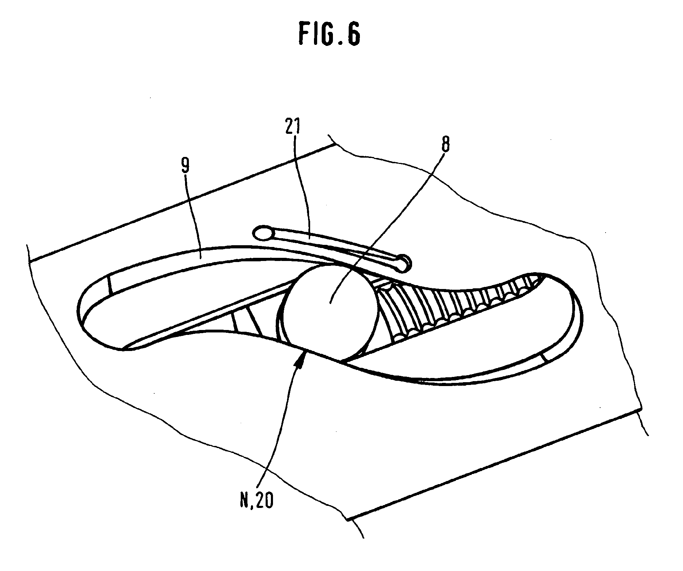

Noch eine alternative Ausführungsform der vorliegenden Erfindung ist in **Figur 6** dargestellt. Hier wird durch Freischneiden eines Raumes 21 hinter oder benachbart einer Kurvenbahn (hier bspw. der Kurvenbahn 9) im Kurvenbahnträger (hier: 13) und unter Nutzung der Elastizität von dessen Grundwerkstoffes eine federnde Verjüngung oder Verengung 20 der entsprechenden Kurvenbahn geschaffen, wobei dies vorzugsweise im neutralen Bereich, d.h. in demjenigen Bereich, in welchem lediglich geringe Drehmomente in der Getriebe-Anordnung oder Stabilisator-Anordnung vorliegen, realisiert ist. Die Rolle 8 wird in der dargestellten Ausführungsform nun leicht eingeklemmt, so das um die Neutrallage N herum überhaupt kein Spiel (Spiel S, vgl. **Fig.2**) auftreten kann. U.a. durch Hinterspritzung mit einem geeigneten elastischen Werkstoff kann die Federsteifigkeit wie gewünscht eingestellt werden. Die jeweilige Seite oder Flanke der Kurvenbahn, an der eine Rolle 8 sodann anliegt, ist somit federnd ausgestaltet. Dieser Effekt kann ebenfalls entweder nur im mittleren "neutralen" Abschnitt einer Kurvenbahn, d.h. in der sog. Neutrallage N des Getriebes 6, in welchem lediglich relativ geringe Drehmomente M auftreten, vorgesehen sein, oder sich über die gesamte Länge einer Kurvenbahn (9, 9', ...., 10, 10',...) erstrecken, und zwar letzteres bevorzugt durch Einbringung eines elastischen Kunststoffes mit oder ohne Stahlhaut für die Lauffläche und/oder mittels eines separaten Federelementes z.B. aus Stahl.

Neben diesen soweit beschriebenen Ausführungsformen gibt es noch eine Vielzahl weiterer Möglichkeiten zur Erzielung des erfindungsgemäßen Effekts, nämlich dass die in den Kurvenbahnen 9, 10 usw. geführten Elemente (hier Rollen 8) derart mit einer Vorspannung beaufschlagt sind, dass sie sich in einer im wesentlichen unbelasteten Neutrallage N des Getriebes 6 in Anlage mit einer Kurvenbahn, genauer mit einer Flanke oder Seite derselben, befinden. Dabei kann diese Vorspannung auch am Koppelelement 7 selbst aufgebracht werden, daneben auch an der oder den Achse(n) 17, insbesondere wenn diese (zumindest abschnittsweise) aus einem federelastischen Material besteht. Dieser sowie allen vorstehend beschriebenen Ausführungsformen ist gemeinsam, daß ein Wechsel einer Rolle 8 (bzw. allgemein einem in einer Kurvenbahn geführten Element) von einer Seite oder Flanke der Kurvenbahn zur anderen Seite oder Flanke verhindert oder in einen Bereich verschoben wird, in dem allgemein das Getriebe 6 und im besonderen die Stabilisator-Anordnung 1 nicht momentenfrei sind. Dieser sog. verschobene Bereich wird wesentlich weniger häufig als ein neutraler Bereich durchfahren. Die am Aktuator 2 auftretenden Geräusche werden durch diese Maßnahme stark reduziert und zudem wird im Zuge eines häufigen Aufsetzens der Rollen auf den Kurvenbahnen auftretender Verschleiß deutlich gemindert.

## Patentansprüche

1. Getriebe (6), insbesondere für den Einsatz in einer Stabilisatoranordnung (1) für ein Fahrwerk eines Kraftfahrzeugs, wobei das Getriebe (6) als Kurvenbahn-Getriebe ausgebildet ist und ein Koppelelement (7) aufweist, das in voneinander verschiedenen Kurvenbahnen (9, 10) zweier voneinander getrennter Kurvenbahnträger (13, 14) eingreifend und bei mechanischer Kopplung mit einem Antrieb (5) zum Verschieben entlang einer dem Koppelelement (7) und den Kurvenbahnträgern (13,14) gemeinsamen Längsachse (A) ausgebildet ist,
**dadurch gekennzeichnet, dass** das Koppelelement (7) ein in die Kurvenbahnen (9, 10) der Kurvenbahnträger (13,14) eingreifendes Element aufweist, das derart mit einer Vorspannung beaufschlagt ist, dass es sich in einer im wesentlichen unbelasteten Neutrallage (N) des Getriebes (6) in Anlage mit einer Kurvenbahn (9, 10) jedes der Kurvenbahnträger (13, 14) befindet.

2. Getriebe nach Anspruch 1,
**dadurch gekennzeichnet, dass** zwei Elemente in jeweils voneinander verschiedene Kurvenbahnen (9, 9', 10, 10') zweier voneinander getrennter Kurvenbahnträger (13, 14) eingreifend angeordnet und Mittel zum federelastischen Verspannen der beiden eingreifenden Elemente vorgesehen sind.

3. Getriebe nach einem der vorhergehenden Ansprüche,
**dadurch gekennzeichnet, dass** die eingreifenden Elemente auf einer gemeinsamen Achse (17) angeordnet sind, wobei die Achse (17) aus einem federelastischen Material besteht, insbesondere einem Federstahl.

4. Getriebe nach einem der vorhergehenden Ansprüche,
**dadurch gekennzeichnet, dass** die Achse (17) aus einem federelastischen Material durch Abweichung aus einer geradlinigen Verbindung zwischen den eingreifenden Elementen vorgespannt ist.

5. Getriebe nach einem der vorhergehenden Ansprüche 2 bis 4,
**dadurch gekennzeichnet, dass** die Bahnen von zwei gegenüberliegen den Kurvenbahnen (9, 9', 10, 10') um einen definierten Betrag zur Erzeugung einer Vorspannung in der Achse (17) versetzt angeordnet sind.

6. Getriebe nach einem der vorhergehenden Ansprüche,
**dadurch gekennzeichnet, dass** eine federelastisch ausgebildete Verengung (20) und/oder ein Federelement im Bereich einer Neutrallage (N) an einer Bahn einer Kurvenbahn (9, 10) vorgesehen ist.

7. Getriebe nach einem der vorhergehenden Ansprüche,
**dadurch gekennzeichnet, dass** an dem Koppelelement (7) zwei Achsen (17) mit eingreifenden Elementen und korrespondierende Kurvenbahnen (9, 9' 9", 9"',10, 10', 10", 10"') in den voneinander getrennten Kurvenbahnträgern (13, 14) vorgesehen sind.

8. Getriebe nach dem vorhergehenden Anspruch,
**dadurch gekennzeichnet, dass** ein Federelement (18) an einer Achse (17) und/oder zwischen den Achsen (17) zur Erzeugung einer Vorspannung angeordnet ist/sind.

9. Getriebe nach einem der vorhergehenden Ansprüche,
**dadurch gekennzeichnet, dass** die Achse oder Achsen (17) an dem Koppelelement (7) angelenkt sind.

10. Getriebe nach einem der vorhergehenden Ansprüche,
**dadurch gekennzeichnet, dass** das eingreifende Element als Rolle (8) oder Rollenpaar (16) ausgebildet ist.

11. Getriebe nach einem der vorhergehenden Ansprüche,
**dadurch gekennzeichnet, dass** die eingreifenden Elemente gegeneinander so verspannt sind, dass jedes eingreifende Element mindestens im Bereich einer Neutrallage (N) auf einer Seite der Kurvenbahn (9, 10) anliegt.

12. Getriebe nach dem vorhergehenden Anspruch,
**dadurch gekennzeichnet, dass** zur gegenseitigen Verspannung der eingreifenden Elemente eine federelastisch ausgebildete, zueinander exzentrische Lagerung der eingreifenden Elemente auf einem gemeinsamen Ende der Achse (17) vorgesehen ist.

13. Aktuator, insbesondere für den Einsatz in einer Stabilisatoranordnung für ein Fahrwerk eines Kraftfahrzeugs,
**dadurch gekennzeichnet, dass** der Aktuator (2) eine Antriebseinheit (5) und ein Getriebe (6) nach einem der vorhergehenden Ansprüche aufweist.

14. Aktuator nach dem vorhergehenden Anspruch,
**dadurch gekennzeichnet, dass** die Antriebseinheit (5) eine Gewindespindel umfaßt, auf der das Koppelelement (7) als Mutter axial verschieblich angeordnet ist.

15. Aktuator nach einem der vorhergehenden Ansprüche,
**dadurch gekennzeichnet, daß** die Antriebseinheit (5) einen Elektromotor umfasst.

16. Stabilisatoranordnung für ein Fahrwerk eines Kraftfahrzeugs,
**dadurch gekennzeichnet, dass** die Stabilisatoranordnung (1) ein Getriebe (6) nach einem der vorhergehenden Ansprüche und/oder einen Aktuator (2) nach einem der vorhergehenden Ansprüche aufweist.

17. Stabilisatoranordnung nach dem vorhergehenden Anspruch,
**dadurch gekennzeichnet, dass** an dem Aktuator (2) Stabilisatorhälften (3, 4) drehfest angeordnet sind, insbesondere an dem äußeren Kurvenbahnträger (13) und dem Antrieb (5).

## Claims

1. A gear unit (6), especially for use in a stabiliser arrangement (1) for the running gear of a motor vehicle, wherein the gear unit (6) is a curved path gear unit and comprises a coupling element (7) which engages in different curved paths (9, 10) of two separate curved-path holders (13, 14) and when mechanically coupled to a drive (5) is adapted to move along a longitudinal axis (A) common to the coupling element (7) and the curved path holders (13, 14),
**characterised in that** the coupling element (7) comprises an element which engages in the curved paths (9, 10) of the curved-path holders (13, 14) and is prestressed so that in a substantially unloaded neutral position (N) of the gear unit (6) the element abuts a curved path (9, 10) on one of the curved-path holders (13, 14).

2. A gear unit according to claim 1, **characterised in that** two elements engage in respective different curved paths (9, 9', 10, 10') on two different curved path holders (13, 14) and means are provided for elastic bracing of the two engaging elements.

3. A gear unit according to any of the preceding claims, **characterised in that** the engaging elements are disposed on a common shaft (17), wherein the shaft (17) is made of an elastic material, especially spring steel.

4. A gear unit according to any of the preceding claims, **characterised in that** the shaft (17) is made of elastic material and is prestressed by deviating from a straight-line connection between the engaging elements.

5. A gear unit according to any of the preceding claims 2 to 4, **characterised in that** two opposite curved paths (9, 9', 10, 10') are offset by a defined amount in order to generate a prestress in the shaft (17).

6. A gear unit according to any of the preceding claims, **characterised in that** an elastic constriction (20) and/or a spring element is provided at a neutral position (N) on one curved path (9, 10).

7. A gear unit according to any of the preceding claims, **characterised in that** two shafts (17) on the coupling element (7) are provided with engaging elements and corresponding curved paths (9, 9', 9", 9"', 10, 10', 10", 10''') in the separate curved path holders (13, 14).

8. A gear unit according to the preceding claim, **characterised in that** a spring element (18) is disposed on a shaft (17) and/or between the shafts (17) in order to generate a prestress.

9. A gear unit according to any of the preceding claims, **characterised in that** the shaft or shafts (17) are pivoted on the coupling element.

10. A gear unit according to any of the preceding claims, **characterised in that** the engaging element is a roller (8) or pair of rollers (16).

11. A gear unit according to any of the preceding claims, **characterised in that** the engaging elements are braced against each other so that each engaging element abuts one side of the curved path (9, 10) at least at a neutral position (N).

12. A gear unit according to the preceding claim, **characterised in that** in order to brace the engaging elements against one another, elastic bearings, eccentric relative to one other, are provided for the engaging elements on a common end of the shaft (17).

13. An actuator, especially for use in a stabiliser arrangement for the running gear of a motor vehicle, **characterised in that** the actuator (2) comprises a drive unit (5) and a gear unit (6) according to any of the preceding claims.

14. An actuator according to the preceding claim, **characterised in that** the drive unit (5) comprises a threaded spindle on which a nut in the form of the coupling element (7) is axially movable.

15. An actuator according to any of the preceding claims, **characterised in that** the drive unit (5) comprises an electric motor.

16. A stabiliser arrangement for the running gear of a motor vehicle, **characterised in that** the stabilising arrangement (1) comprises a gear unit (6) according to any of the preceding claims and/or an actuator (2) according to any of the preceding claims.

17. A stabiliser arrangement according to the preceding claim, **characterised in that** half-stabilisers (3, 4) are co-rotatably disposed on the actuator (2), especially on the outer curved path holder (13) and on the drive unit (5).

## Revendications

1. Transmission (6), notamment pour utilisation dans un système stabilisateur (1) destiné à un train roulant d'un véhicule automobile, cette transmission (6) étant à piste de came et comprenant un élément d'accouplement (7) qui est engagé dans des pistes de came (9, 10) différentes de deux supports de pistes de came (13, 14) séparés l'un de l'autre et qui, par accouplement mécanique avec un entraînement (5) peut coulisser le long d'un axe longitudinal (A) commun à l'élément d'accouplement (7) et aux supports de pistes de came (13, 14),
**caractérisée en ce que**
l'élément d'accouplement (7) présente un élément qui est engagé dans les pistes (9, 10) des supports de pistes de came (13, 14) et qui est soumis à une précontrainte de manière à se trouver, quand la transmission (6) occupe une position neutre (N) essentiellement non chargée, en contact avec une piste de came (9, 10) de chacun des supports de pistes de came (13, 14).

2. Transmission selon la revendication 1,
**caractérisée en ce que**
deux éléments sont en prise dans deux pistes de came (9, 9', 10, 10') différentes de deux supports de pistes de came (13, 14) séparés l'un de l'autre, et des moyens sont prévus pour précontraindre élastiquement ces deux éléments.

3. Transmission selon la revendication 1 ou 2,
**caractérisée en ce que**
les éléments en prise sont disposés sur un axe commun (17) fait d'un matériau élastique, par exemple un acier à ressort.

4. Transmission selon l'une des revendications précédentes,
**caractérisée en ce que**
l'axe (17) en matériau élastique est précontraint en s'écartant d'une liaison rectiligne entre les éléments en prise.

5. Transmission selon l'une des revendications 2 à 4,
**caractérisée en ce que**
les pistes de came (9, 9', 10, 10') opposées sont décalées d'une quantité définie de manière à créer une précontrainte dans l'axe (17).

6. Transmission selon l'une des revendications précédentes,
**caractérisée en ce qu'**
il est prévu sur une piste de came (9, 10) un rétrécissement (20) à caractère élastique et/ou un élément élastique dans la zone d'une position neutre (N).

7. Transmission selon l'une des revendications précédentes,
**caractérisée en ce qu'**
il est prévu sur l'élément d'accouplement (7) deux axes (17) avec des éléments en prise et des pistes de came correspondantes (9, 9', 9", 9"' et 10, 10', 10", 10"') dans les supports de pistes de came séparés l'un de l'autre.

8. Transmission selon une des revendications précédentes,
**caractérisée en ce qu'**
un élément élastique (18) est disposé sur un axe (17) ou entre les axes (17), pour produire une précontrainte.

9. Transmission selon une des revendications précédentes,
**caractérisée en ce que**
l'axe ou les axes (17) sont articulés à l'élément d'accouplement (7).

10. Transmission selon l'une des revendications précédentes,
**caractérisée en ce que**
l'élément en prise est un galet (8) ou une paire de galets (16).

11. Transmission selon l'une des revendications précédentes,
**caractérisée en ce que**
les éléments en prise sont précontraints l'un par rapport à l'autre de manière que chacun d'eux soit appliqué sur un côté de la piste de came (9, 10) correspondante, au moins dans la zone d'une position neutre (N).

12. Transmission selon l'une des revendications précédentes,
**caractérisée en ce que**
pour réaliser la précontrainte réciproque des éléments en prise, il est prévu sur une même extrémité de l'axe (17) un montage élastique avec excentration de l'un par rapport à l'autre, des éléments en prise.

13. Actionneur, notamment pour utilisation dans un système stabilisateur pour un train roulant de véhicule automobile,
**caractérisé en ce que**
l'actionneur (2) présente une unité d'entraînement (5) et une transmission (6) selon une des revendications précédentes.

14. Actionneur selon la revendication 13,
**caractérisé en ce que**
l'unité d'entraînement (5) comprend une broche filetée sur laquelle peut coulisser axialement l'élément d'accouplement (7) constitué en écrou.

15. Actionneur selon la revendication 13 ou 14,
**caractérisé en ce que**
l'unité d'entraînement (5) comprend un moteur électrique.

16. Système stabilisateur pour un train roulant d'un véhicule automobile,
**caractérisé en ce qu'**
il comprend une transmission (6) selon une des revendications précédentes et/ou un actionneur (2) selon une des revendications précédentes.

17. Système stabilisateur selon la revendication 16,
**caractérisé en ce que**
sur l'actionneur (2) sont montées deux moitiés de stabilisateur (3, 4) avec solidarité en rotation, en particulier sur le support de pistes de came (13) externe et sur l'entraînement (5).
